# NEUE EUROPÄISCHE PATENTSCHRIFT

(11) **EP 0 335 173 B2**
(45) Veröffentlichungstag und Bekanntmachung des Hinweises auf die Entscheidung über den Einspruch: **17.07.1996**
(45) Hinweis auf die Patenterteilung: 10.11.1993
(21) Anmeldenummer: 89104600.5
(22) Anmeldetag: 15.03.1989
(51) Int. Cl.: B01D 19/04

(54) **Schaumdämpfungsmittel**
Antifoam additive
Additif antimousse

(30) Priorität: 26.03.1988 DE 3810426
(43) Veröffentlichungstag der Anmeldung: 04.10.1989
(73) Patentinhaber: BAYER AG, 51368 Leverkusen (DE)
(72) Erfinder: Walz, Klaus, Dr., D-5090 Leverkusen 3 (DE); Breyer, Karl-Heinz, D-5067 Kürten-Biesfeld (DE)

(56) Entgegenhaltungen:
- EP-A- 0 035 702
- EP-A- 0 087 233
- EP-A- 0 207 002
- EP-A- 0 263 069
- CH-A- 588 879
- DE-A- 3 100 353
- DE-A- 3 242 202
- DE-C- 1 257 111
- US-A- 4 032 473

## Beschreibung

Gegenstand der Erfindung sind Schaumdämpfungs- und Entlüftungsmittel, die aus
a) einem Ester von aliphatischen Carbonsäuren und aliphatischen Alkoholen mit einem Siedepunkt von mindestens 150°C, und - bezogen auf a -
b) 0,5-10 Gew.-% eines Amids der Formel 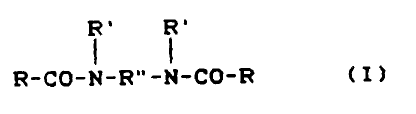 in der
   - R: für c₁₀-C₂₂-Alkyl oder -Alkenyl,
   - R': für H, C₁-C₄-Alkyl oder beide R' zusammen für eine Ethylenbrücke und
   - R'': für die Reste 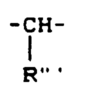 oder -CH₂-O-CH₂- stehen, wobei
   - R''': für H, C₁-C₆-Alkyl oder Phenyl steht, und
c) 1-30 Gew.-% eines nichtionischen Tensids bestehen
und ihre Verwendung zur Entschäumung, zur Verhinderung der Schaumbildung und zur Entlüftung von wäßrigen Systemen.

Als Ester kommen vor allen solche mit einem Schmelzpunkt unter 50°C in Betracht.

Die Gesamtzahl der Kohlenstoffatome der Ester a) beträgt mindestens 12 und liegt vorzugsweise bei 12-70.

Insbesondere sind Ester aus Mono- und Dicarbonsäuren und 1-4 wertigen Alkoholen zu nennen.

Die Carbonsäuren können gesättigt und ungesättigt sein und durch 1 oder 2 OH-Gruppen substituiert sein. Sie besitzen bevorzugt 1 bis 22 Kohlenstoffatome.

Insbesondere sind Monocarbonsäuren mit 1-22, inbesondere 12-22 C-Atomen und Dicarbonsäuren mit 2-8, insbesondere 4-6 C-Atomen zu nennen.
Als Beispiele seien genannt:
Ameisensäure, Essigsäure, Octansäure, Decansäure, Dodecansäure, Dodecensäure, Tetradecansäure, Hexadecansäure, Octadecansäure, Octadecensäure, Octadecadiensäure, Eikosansäure, Eikosensäure, Docosansäure, Docosensäure, Bernsteinsäure, Maleinsäure und Adipinsäure.

Die Kohlenstoffkette der Alkohole kann gesättigt und ungesättigt sein und durch 1 oder 2 Sauerstoffatome unterbrochen sein. Sie besitzt insbesondere 1 bis 18 Kohlenstoffatome.

Insbesondere sind C₁-C₁₈-Alkanole und -Alkenole, C₂-C₆-Alkandiole, C₃-C₅-Alkantriole, C₄- oder C₅-Alkantetrole, Di- und Triethylenglykol, Di- und Tripropylenglykol, gemischte Di- und Triethylen/propylenglykole und Mono-C₁-C₄-alkylether der genannten mehrwertigen Alkohole zu nennen.
Als Beispiele seien genannt:
Methanol, Ethanol, Propanol, Isopropanol, Butanol, sek.-Butylalkohol, tert.-Butanol, Hexanol, 2-Ethylhexanol, Octanol, Decanol, Dodecanol, Tridecylalkohol, Ethylenglykol, Propylenglykol, Butandiol, Hexandiol, Glycerin, Erythrit, Pentaerythrit, Diethylenglykol, Dipropylenglykol, Tripropylenglykol, Diethylenglykol - monomethylether und -monobutylether.
Beispielhaft seien für die Ester genannt:
Laurinsäuremethylester, Kokosfettsäuremethylester, Talgfettsäuremethylester, Ölsäuremethylester, Laurinsäurebutylester, Laurinsäurehexylester, Myristinsäureisopropylester, Palmitinsäureisopropylester, Stearinsäureisobutylester, Stearinsäuretridecylester, Ölsäuredecylester, Essigsäuredecylester, Essigsäurehexadecylester, Malonsäuredidecylester, Maleinsäure-diisooctylester, Maleinsäuredidocylester, Maleinsäure-ditridecylester, Adipinsäuredibutylester, Adipinsäure-diisooctylester, Propylenglykoldistearat, Diethylenglykoldilaurat, Laurinsäuretriglycerid, Kokosfett, Olivenöl, Rizinusöl, Sojaöl, Palmöl, Palmkernöl, Tallöl, Rapsöl, Talgfett, Spermöl, Trimethylolpropan-tri-decansäureester und Pentaerythrit-tetraisopalmitinsäureester.
Als Amide der Formel (I) seien beispielsweise genannt:
Methylen-bis-laurinsäureamid, Methylen-bis-myristinsäureamid, Methylen-bis-palmitinsäureamid, Methylen-bis-stearinsäureamid, Methylen-bis-eikosansäureamid, Methylen-bis-behensäureamid, Methylen-bis-ölsäureamid, Isobutylen-bis-stearinsäureamid, Benzyliden-bis-stearinsäureamid, Methylen-bis-linolsäureamid, Bispalmitoylaminoethyl-ether, Bis-stearoylaminomethylether, 1,3-Bis-lauroylimidazolidin oder 1,3-Bis-stearylimidazolidin. Bevorzugte Zusammensetzungen enthalten Methylen-bis-stearinsäureamid, Methylen-bis-eikosansäureamid oder Methylen-bis-behensäureamid, insbesondere jedoch Methylen-bis-stearinsäureamid. Die Verbindungen sind größtenteils bekannt und lassen sich nach bekannten Verfahren, wie sie beispielsweise in der DE-A-2 202 831 oder in der US-A-2 554 846 beschrieben sind, herstellen.

Geeignete nichtionische Tenside sind Umsetzungsprodukte von 8 bis 20 Kohlenstoffatome enthaltenden, gegebenenfalls ungesättigten Fettsäuren, Fettsäureamiden, Fettsäureglyceriden, Fettalkoholen oder Fettaminen oder C₆-C₁₂-Alkylphenolen mit Ethylenoxid und/oder Propylenoxid, sowie Derivate solcher Verbindungen, wie sie beispielsweise durch Veresterung der endständigen Hydroxylgruppen mit Carbonsäuren, wie Essigsäure, Laurinsäure oder Benzoesäure, oder durch Veretherung mit z.B. Isobutylen oder Alkylchloriden erhalten werden. Weitere geeignete nichtionische Tenside sind auch oberflächenaktive Derivate von mehrwertigen Alkoholen, beispielsweise Fettsäureester von Säuren mit 10-20 Kohlenstoffatomen und Pentiten, Hexiten, Pentosen, Hexosen oder Polysacchariden, sowie deren Oxethylierungsprodukte. Bevorzugte nichtionische Tenside sind Umsetzungsprodukte von 12-18 Kohlenstoffatome enthaltenden Fettsäuren, Fettsäureamiden oder Fettsäureglyceriden mit 3-30 Mol Ethylenoxid, von 8-18 Kohlenstoffatome enthaltenden Fettalkoholen oder C₆-C₉-Alkylphenolen mit 3-30 Mol Ethylenoxid, oder Ester solcher Verbindungen mit 12-18 Kohlenstoffatome enthaltenden Fettsäuren.
Bevorzugte Entschäumungsmittel bestehen aus
a) einem Ester von 12-22 Kohlenstoffatome enthaltenden Fettsäuren mit 1-4 Kohlenstoffatome enthaltenden einwertigen Alkoholen, Diester dieser Fettsäuren mit 2-6 Kohlenstoffatome enthaltenden Diolen oder insbesondere synthetische oder natürliche Triester dieser Fettsäuren mit Glycerin,
b) 1-8 Gew.-% - bezogen auf a - eines Amids der Formel (I), insbesondere Methylen-bis-stearinsäureamid, und
c) 4-25 Gew.-% - bezogen auf a - eines nichtionischen Tensids, insbesondere eines Umsetzungsproduktes von 8-18 Kohlenstoffatome enthaltenden aliphatischen Alkoholen, Fettsäuren, Fettsäureamiden oder Fettsäureglyceriden mit 3-30 Mol Ethylenoxid.

Zur Herstellung der erfindungsgemäßen Zusammensetzungen können die einzelnen Komponenten in beliebiger Reihenfolge miteinander vermischt werden. Hierzu wird die Mischung über den Schmelzpunkt des Amids der Formel (I) erhitzt und anschließend unter gutem Rühren möglichst rasch auf Temperaturen unter 50°C abgekühlt.

Bevorzugt wird das Amid der Formel (I) in einem Teil des verwendeten Esters bei 100-150°C gelöst und die heiße Lösung dann langsam in eine auf 10-80°C, vorzugsweise 20-50°C gehaltene Mischung aus dem restlichen Ester und den Emulgatoren eingetragen. Der nichtionische Emulgator kann auch ganz oder teilweise zur heißen Lösung des Amids im Ester gegeben werden, oder erst in die kalte Dispersion des Amids (I) in dem Ester nachgerührt werden.

Die erfindungsgemäßen Schaumdämpfungsmittel eignen sich hervorragend zur Schaumdämpfung und zur Verhinderung der Schaumbildung in wäßrigen, zum Schäumen neigenden Systemen. Insbesondere sind sie für den Einsatz in allen Verarbeitungsstufen der Textilindustrie, z.B. beim Entschlichten, Blechen, bei der Vorbehandlung, beim Färben, Drucken, Nachwaschen, bei der Appretur und Hochveredlung, geeignet. Weitere Einsatzgebiete sind beispielsweise die Zucker-, Papier-, Leder- und Lackindustrie.

Darüber hinaus eignen sich die erfindungsgemäßen Mittel hervorragend zur Entlüftung von wäßrigen Systemen. Sie können eingesetzt werden zur Entfernung von Luftblasen in Textilbehandlungsflotten, beispielsweise beim Färben von Kreuzspulen. Die Luftblasen führen zu unegalen Färbungen.

Die jeweiligen Einsatzmengen der Mittel richten sich im allgemeinen nach dem Gehalt der wäßrigen Systeme an schäumenden Komponenten und nach den apparativen Gegebenheiten. Sie können durch einfache Vorversuche leicht ermittelt werden. Für Textilbehandlungsbäder haben sich im allgemeinen Mengen von 0,01-3 g/l bzw. 0,1-5 g/kg bei Druckpasten als ausreichend erwiesen.

Gegenüber den bisher häufig verwendeten silikonhaltigen Schaumdämpfungsmittel besitzen die erfindungsgemäßen Schaumdämpfungsmittel den Vorteil, daß sie nicht zu den schlecht entfernbaren, gefürchteten Silikonflecken auf den behandelten Textilien führen. Dieser Vorteil wirkt sich besonders beim Arbeiten in kurzen Flottenverhältnissen z.B. 1:5 bis 1:15 aus, da hierbei die Emulsionen von siliconhaltigen Schaumdämpfungsmittel durch die in den Apparaten auftretende hohe Mechanik zerschlagen werden. Ein weiterer Vorteil der erfindungsgemäßen Schaumdämpfungsmittel liegt in ihrer höheren Stabilität gegenüber Frosteinwirkung. Silikonhaltige Schaumdämpfungsmittel-Emulsionen werden unter diesen Bedingungen instabil.

Gegenüber handelsüblichen, siliconfreien Schaumdämpfungsmitteln auf Mineralöl- oder Polyetherbasis zeichnen sich die erfindungsgemäßen Schaumdämpfungsmittel dadurch aus, daß sie eine bessere und gleichbleibende schaumdämpfende Wirkung in stark saurem, im neutralen und im alkalischen Bereich zeigen.

Gegenüber den in EP-A-35 702 beschriebenen Zusammensetzungen bieten die erfindungsgemäßen Schaumdämpfungsmittel noch den Vorteil, daß auch ohne die dort angegebenen quaternären Ammoniumverbindungen Produkte erhalten werden, die in Wasser stabile Emulsionen bilden.

Die schaumdämpfende Wirkung der erfindungsgemäßen Produkte wurde nach der in "Bayer Farben Revue" Sonderheft 9, August 1967, S. 77 beschriebenen Methode geprüft.

Bei Produktvergleichen werden bei Überschreitung der 15 Sekunden-Grenze die Prüfmengen des Entschäumers so lange erhöht, bis der Schaum innerhalb des genannten Zeitraumes von 0-15 Sekunden zerfällt.

Bei dem in den Beispielen angegebenen Teilen handelt es sich um Gewichtsteile.

### Beispiel 1

12,3 Teile Methylen-bis-stearinsäureamid werden in 120 Teilen Sojaöl bei 130-140°C gelöst. Man läßt nun diese Lösung langsam zu einer bei 20-30°C gehaltenen Mischung zulaufen, die aus 110 Teilen Sojaöl, 43 Teilen eines Umsetzungsproduktes von technischem Laurylalkohol mit 3 Mol Ethylenoxid, 12 Teilen eines Umsetzungsproduktes von Nonylphenol mit 7 Mol Ethylenoxid und 7,8 Teilen eines Umsetzungsproduktes von Oleylalkohol mit 20 Mol Ethylenoxid besteht. Man rührt 30 Minuten bei 20-30°C und erhalt eine ölige Dispersion, die in Wasser emulgierbar ist. (Viskosität bei 25°C: 155 mPa.s, charakteristische IR-Banden bei 3,02 und 6,45 µm).

### Beispiel 2

25 Teile Methylen-bis-stearinsäureamid werden in 180 Teilen Rapsöl bei 130°C gelöst. Diese Lösung läßt man nun langsam in eine bei 30°C gehaltene Mischung eintropfen, die aus 260 Teilen Rapsöl, 85 Teilen eines Umsetzungsproduktes von technischem Laurylalkohol mit 3 Mol Ethylenoxid, 18,2 Teile eines Umsetzungsproduktes von Nonylphenol mit 6 Mol Ethylenoxid, 5,8 Teilen eines Umsetzungsproduktes von Nonylphenol mit 10 Mol Ethylenoxid und 15,4 Teilen eines Umsetzungsproduktes von Oleylalkohol mit 20 Mol Ethylenoxid besteht. Nach beendeter Zugabe rührt man noch 1/2 Stunde nach und erhält dann eine ölige Dispersion, die in Wasser emulgierbar ist. (Viskosität bei 25°C: 222 mPa.s, charakteristische IR-Banden bei 3,02 und 6,45 µm).

### Beispiel 3

24,6 Teile Methylen-bis-stearinsäureamid werden in 220 Teilen geschmolzenem Rindertalg bei 140°C gelöst. Diese Lösung läßt man dann zu einer auf 40-50°C erhitzten Mischung zutropfen, die aus 220 Teilen Rindertalg, 80 Teilen eines Umsetzungsproduktes von technischem Laurylalkohol mit 3 Mol Ethylenoxid, 24 Teilen eines Umsetzungsproduktes von Nonylphenol mit 7 Mol Ethylenoxid, und 16 Teilen eines Umsetzungsproduktes von Oleylalkohol mit 20 Mol Ethylenoxid besteht. Man rührt 1/2 Stunde und läßt dann bei 50°C 590 Teile Wasser zutropfen. Es wird eine weiße Emulsion erhalten, die in Wasser leicht verteilbar ist. (Viskosität bei 25°C; 1940 mPa.s).

### Beispiel 4

180 Teile Isobutylstearat und 30 Teile Methylen-bis-stearinsäuramid werden bei 130-140°C vermischt, bis eine klare Lösung entstanden ist. Diese laßt man nun langsam zu einer bei 20°C gehaltenen Mischung zutropfen, die aus 260 Teilen Isobutylstearat, 85 Teilen eines Umsetzungsproduktes von einem synthetischen C₁₂-C₁₄-Alkohol mit 3 Mol Ethylenoxid, 30 Teilen eines Umsetzungsproduktes von Nonylphenol mit 6 Mol Ethylenoxid, 6 Teilen eines Umsetzungsproduktes von Nonylphenol mit 10 Mol Ethylenoxid und 15,4 Teilen eines Umsetzungsproduktes von Oleylalkohol mit 20 Mol Ethylenoxid besteht. Nach beendeter Zugabe wird 1/2 Stunde gerührt, wobei eine Dispersion entsteht, die sich in Wasser gut emulgieren läßt. (Viskosität bei 25°C: 32,5 mPa.s; charakteristische IR-Banden bei 3,02 und 6,45 µm).

### Beispiel 5

In 180 Teilen Rapsöl werden bei 130°C 29 Teile Methylen-bis-stearinsäureamid gelöst. Diese Lösung läßt man dann zu 260 Teilen Rapsöl innerhalb von 3 Stunden so zulaufen, daß die Temperatur bei 30-35°C gehalten wird, Die erhaltene Suspension versetzt man dann anschließend mit 46 Teilen einer Mischung aus 38,6 Teilen eines Umsetzungsproduktes von technischem Laurylalkohol mit 3 Mol Ethylenoxid und 7,4 Teilen eines Umsetzungsproduktes von Oleylalkohol mit 50 Mol Ethylenoxid. Die Mischung wird 1/2 Stunde bei 20-30°C nachgerührt. Die erhaltene Dispersion läßt sich in Wasser leicht emulgieren. (Viskosität bei 25°C: 216 mPa.s, charakteristische IR-Banden bei 3,02 und 6,45 µm).

### Beispiel 6

12,3 Teile Methylen-bis-stearinsäureamid werden in 120 Teilen Laurinsäuremethylester bei 140°C gelöst. Man läßt nun diese Lösung langsam zu einer bei 30°C gehaltenen Lösung zulaufen, die aus 100 Teilen Laurinsäuremethylester, 43 Teilen eines Umsetzungsproduktes von technischem Laurylalkohol mit 3 Mol Ethylenoxid, 12 Teilen eines Umsetzungsproduktes von Nonylphenol mit 7 Mol Ethylenoxid und 8 Teilen eines Umsetzungsproduktes von Oleylalkohol mit 20 Mol Ethylenoxid besteht. Man rührt 30 Minuten und läßt anschließend bei Raumtemperatur 295 Teile Wasser langsam unter Rühren zulaufen. Es werden 590 Teile einer wäßrigen Emulsion erhalten. (Charakteristische IR-Banden der wasserfreien Dispersion bei 3,02 und 6,45 µm).

### Beispiel 7

10,5 Teile Methylen-bis-stearinsäureamid werden in 200 Teilen Rapsöl bei 130°C gelöst. Diese Lösung läßt man nun langsam in eine auf 30-40°C gehaltene Mischung aus 21 Teilen eines Umsetzungsproduktes von 1 Mol technischem Laurylalkohol mit 3 Mol Ethylenoxid und 202 Teilen Rapsöl zulaufen. Man rührt 1/2 Stunde nach, wobei auf Raumtemperatur abgekühlt wird und erhält eine in Wasser emulgierbare Dispersion. (Charakteristische IR-Banden bei 3,02 und 6,45 µm).

### Beispiel 8

Gemäß der vorstehend genannten Vorschrift wurden die Schaumdämpfungsmittel nebeneinander und gegenüber den Produkten A und B geprüft.
- Einsatzmengen:: x g/l Schaumdämpfungsmittel
0,4 g/l eines Umsetzungsproduktes von 1 Mol Oleylalkohol mit 50 Mol Ethylenoxid.

x steht für die erforderliche Mindestmenge zur Erzielung einer ausreichenden Entschäumung bei pH 7 im Temperaturbereich zwischen 25°C und Kochtemperatur.

| Produkt | Bsp.1 | 2 | 3 | 4 | 5 | 6 | 7 | A | B |
|---|---|---|---|---|---|---|---|---|---|
| x | 0,05 | 0,04 | 0,06 | 0,04 | 0,03 | 0,04 | 0,04 | 0,1 | 0,1 |
| Produkt A ist ein gemäß Beispiel 2 hergestelltes Produkt, in dem das Rapsöl durch ein Mineralöl (gemäß Beispiel 1, EP-A-0 035 702) ersetzt wurde. Produkt B ist ein gemäß Beispiel 7 hergestelltes Produkt, in dem das Rapsöl durch ein Mineralöl (gemäß Beispiel 3, EP-A-0 035 702) ersetzt wurde. | | | | | | | | | |

Aus der Tabelle ist ersichtlich, daß von den entsprechenden Produkten auf Mineralölbasis mehr als die doppelte Menge zur Erzielung ausreichender Entschäumungseffekte erforderlich ist.

## Patentansprüche

1. Schaumdämpfungs- und Entlüftungsmittel, dadurch gekennzeichnet, daß sie aus
a) einem Ester von aliphatischen Carbonsäuren und aliphatischen Alkoholen mit einem Siedepunkt von mindestens 150°C, und - bezogen auf a -
b) 0,5-10 Gew.-% eines Amids der Formel 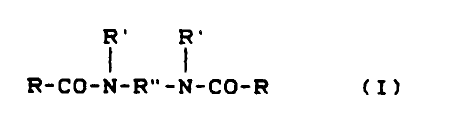 in der
R für C₁₀-C₂₂-Alkyl oder -Alkenyl,
R' für H, C₁-C₄-Alkyl oder beide R' zusammen für eine Ethylenbrücke und
R'' für die Reste 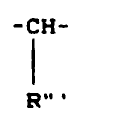 oder -CH₂-O-CH₂-stehen, wobei
R''' für H, C₁-C₆-Alkyl oder Phenyl steht,
und
c) 1-30 Gew.-% eines nichtionischen Tensids bestehen.

2. Schaumdämpfungs- und Entlüftungsmittel gemäß Anspruch 1, dadurch gekennzeichnet, daß sie als Komponente a) einen Ester mit einem Schmelzpunkt von unter 50°C enthalten.

3. Schaumdämpfungs- und Entlüftungsmittel gemäß Anspruch 1, dadurch gekennzeichnet, daß sie als Komponente a) einen Ester mit einer Gesamtzahl von Kohlenstoffatomen von 12-70 enthalten.

4. Schaumdämpfungs- und Entlüftungsmittel gemäß Anspruch 1, dadurch gekennzeichnet, daß sie als Komponenten a) einen Ester aus einer Mono- oder Dicarbonsäure und einem 1-, 2-, 3- oder 4-wertigen Alkohol enthalten.

5. Schaumdämpfungs- und Entlüftungsmittel gemäß Anspruch 1, dadurch gekennzeichnet, daß sie als Komponenten b) Methylen-bis-stearinsäureamid, Methylen-bis-eikosansäureamid und/oder Methylen-bis-behensäureamid enthalten,

6. Schaumdämpfungs- und Entlüftungsmittel gemäß Anspruch 1, dadurch gekennzeichnet, daß sie als Komponente b) Methylen-bis-stearinsäureamid enthalten.

7. Schaumdämpfungs- und Entlüftungsmittel gemäß Anspruch 1, dadurch gekennzeichnet, daß sie als nichtionische Tenside Umsetzungsprodukte von C₁₂-C₁₈-Fettsäuren und/oder Fettsäureamiden und/oder von C₈-C₁₈-Fettalkohlen und/oder von C₆-C₉-Alkylphenolen mit 3-30 Mol Ethylenoxid, oder Ester die durch Umsetzung der endständigen Hydroxylgruppen dieser Verbindungen mit C₁₂-C₁₈-Fettsäuren entstehen, enthalten.

8. Schaumdämpfungs- und Entlüftungsmittel gemäß Anspruch 1, dadurch gekennzeichnet, daß sie
a) einen Ester von 12-22 Kohlenstoffatome enthaltenden Fettsäuren mit 1-4 Kohlenstoffatome enthaltenden einwertigen Alkoholen, Diester dieser Fettsäuren mit 2-6 Kohlenstoffatome enthaltenden Diolen oder synthetische oder natürliche Triester dieser Fettsäuren mit Glycerin,
b) 1-8 Gew 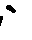 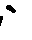 -% - bezogen auf a - eines Amids der Formel (I),
c) 4-25 Gew.-% - bezogen auf a - eines nichtionischen Tensids, insbesondere eines Umsetzungsproduktes von 8-18 Kohlenstoffatome enthaltenden aliphatischen Alkoholen, Fettsäuren, Fettsäureamiden oder Fettsäureglyceriden mit 3-30 Mol Ethylenoxid
enthalten.

9. Verwendung der Mittel gemäß Anspruch 1 zur Verhinderung der Schaumbildung oder zur Entschäumung von wäßrigen Systemen.

10. Verwendung der Mittel gemäß Anspruch 1 zur Entlüftung von wäßrigen Systemen.

## Claims

1. Foam suppressants and deaerating agents, characterized in that they comprise
a) an ester of aliphatic carboxylic acids and aliphatic alcohols having a boiling point of at least 150°C and - based on a -
b) 0.5-10% by weight of an amide of the formula 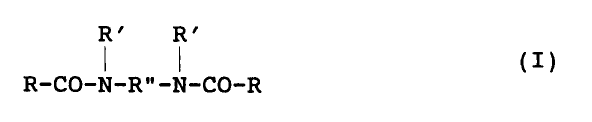 in which
R represents C₁₀-C₂₂-alkyl or -alkenyl,
R' represents H or C₁-C₄-alkyl, or the two R' together represent an ethylene bridge, and
R'' represents the radicals 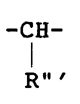 or -CH₂-O-CH₂-, wherein
R''' represents H, C₁-C₆-alkyl or phenyl,
and
c) 1-30% by weight of a non-ionic surfactant.

2. Foam suppressants and deaerating agents according to Claim 1, characterized in that they contain an ester having a melting point of less than 50°C as component a).

3. Foam suppressants and deaerating agents according to Claim 1, characterized in that they contain an ester having a total number of carbon atoms of 12-70 as component a).

4. Foam suppressants and deaerating agents according to Claim 1, characterized in that they contain an ester of a mono- or dicarboxylic acid and of a 1-, 2-, 3-or 4-hydric alcohol as component a).

5. Foam suppressants and deaerating agents according to Claim 1, characterized in that they contain methylene-bis-stearic acid amide, methylene-bis-eicosanoic acid amide and/or methylene-bis-behenic acid amide as components b).

6. Foam suppressants and deaerating agents according to Claim 1, characterized in that they contain methylene-bis-stearic acid amide as component b).

7. Foam suppressants and deaerating agents according to Claim 1, characterized in that they contain reaction products of C₁₂-C₁₈-fatty acids and/or fatty acid amides and/or of C₈-C₁₈-fatty alcohols and/or of C₆-C₉-alkylphenols with 3-30 mol of ethylene oxide, or esters which are formed by reaction of the terminal hydroxyl groups of these compounds with C₁₂-C₁₈-fatty acids, as non-ionic surfactants.

8. Foam suppressants and deaerating agents according to Claim 1, characterized in that they contain
a) an ester of fatty acids containing 12-22 carbon atoms with monohydric alcohols containing 1-4 carbon atoms, diesters of these fatty acids with diols containing 2-6 carbon atoms or synthetic or naturally occurring triesters of these fatty acids with glycerol,
b) 1-8% by weight - based on a - of an amide of the formula (I) and
c) 4-25% by weight - based on a - of a non-ionic surfactant, in particular of a reaction product of aliphatic alcohols, fatty acids, fatty acid amides or fatty acid glycerides containing 8-18 carbon atoms with 3-30 mol of ethylene oxide.

9. Use of the agents according to Claim 1 for preventing foam formation or for removing foam in aqueous systems.

10. Use of the agents according to Claim 1 for deaerating aqueous systems.

## Revendications

1. Compositions anti-moussantes et dégazantes, caractérisées en ce qu'elles sont constituées par
a) un ester d'acides carboxyliques aliphatiques et d'alcools aliphatiques ayant un point d'ébullition d'au moins 150°C et - par rapport à a -
b) 0,5 à 10 % en poids d'un amide de formule 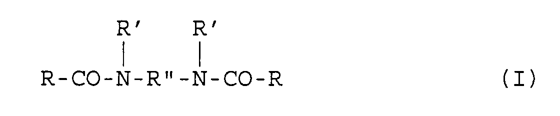 dans laquelle
R est un groupe alkyle ou alcényle en C₁₀ à C₂₂,
R' représente H, un groupe alkyle en C₁ à C₄ ou bien les deux groupes R' forment conjointement un pont éthylène et
R'' représente les restes 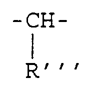 ou -CH₂-O-CH₂-,où
R''' représente H, un groupe alkyle en C₁ à C₆ ou phényle, et
c) 1 à 30 % en poids d'un agent tensio-actif non ionique.

2. Compositions anti-moussantes et dégazantes suivant la revendication 1, caractérisées en ce qu'elles contiennent comme composant a) un ester ayant un point de fusion inférieur à 50°C.

3. Compositions anti-moussantes et dégazantes suivant la revendication 1, caractérisées en ce qu'elles contiennent comme composant a) un ester ayant un nombre total d'atomes de carbone de 12 à 70.

4. Compositions anti-moussantes et dégazantes suivant la revendication 1, caractérisées en ce qu'elles contiennent comme composant a) un ester d'un acide monocarboxylique ou dicarboxylique et d'un alcool monovalent, divalent, trivalent ou tétravalent.

5. Compositions anti-moussantes et dégazantes suivant la revendication 1, caractérisées en ce qu'elles contiennent comme composant b) l'amide d'acide méthylène-bis-stéarique, l'amide d'acide méthylène-bis-eicosanique et/ou l'amide d'acide méthylène-bis-béhénique.

6. Compositions anti-moussantes et dégazantes suivant la revendication 1, caractérisées en ce qu'elles contiennent comme composant b) l'amide d'acide méthylène-bis-stéarique.

7. Compositions anti-moussantes et dégazantes suivant la revendication 1, caractérisées en ce qu'elles contiennent comme agents tensio-actifs non ioniques des produits de réaction d'acides gras et/ou d'amides d'acides gras en C₁₂ à C₁₈ et/ou d'alcools gras en C₈ à C₁₈ et/ou d'alkylphénols en C₆ à C₉ avec 3 à 30 moles d'oxyde d'éthylène, ou des esters qui sont produits par réaction des groupes hydroxyle terminaux de ces composés avec des acides gras en C₁₂ à C₁₈.

8. Compositions anti-moussantes et dégazantes suivant la revendication 1, caractérisées en ce qu'elles contiennent
a) un ester d'acides gras contenant 12 à 22 atomes de carbone avec des alcools monovalents contenant 1 à 4 atomes de carbone, des diesters de ces acides gras avec des diols contenant 2 à 6 atomes de carbone ou des triesters synthétiques ou naturels de ces acides gras avec le glycérol,
b) 1 à 8 % en poids - par rapport à a - d'un amide de formule (I),
c) 4 à 25 % en poids - par rapport à a - d'un agent tensio-actif non ionique, notamment d'un produit de réaction d'alcools aliphatiques contenant 8 à 12 atomes de carbone, d'acides gras, d'amides d'acides gras ou de glycérides d'acides gras avec 3 à 30 moles d'oxyde d'éthylène.

9. Utilisation des compositions suivant la revendication 1 pour empêcher la formation d'une mousse ou pour éliminer la mousse de systèmes aqueux.

10. Utilisation des compositions suivant la revendication 1 pour le dégazage de systèmes aqueux.
